# EUROPÄISCHE PATENTANMELDUNG

(11) **EP 4 621 611 A1**
(43) Veröffentlichungstag der Anmeldung: **24.09.2025**
(21) Anmeldenummer: 24165068.8
(22) Anmeldetag: 21.03.2024
(51) Int. Cl.: G06F 21/10

(54) **VERFAHREN UND ANORDNUNG ZUR VERWALTUNG EINER LIZENZ FÜR EIN OFFLINE EINSETZBARES GERÄT MITTELS EINES NON-FUNGIBLE TOKENS**

(71) Anmelder: Siemens Aktiengesellschaft, 80333 München (DE)
(72) Erfinder: Hinkelmann, Andreas, 91126 Schwabach (DE); Singh, Saurabh Narayan, 81739 München (DE)
(74) Vertreter: Siemens Patent Attorneys

(57) **Zusammenfassung**

Die Erfindung betrifft ein Verfahren und eine mobile Hardware (MHW), zur Verwaltung einer Lizenz für ein offline einsetzbares Gerät (G1, G2, G3), insbesondere für eine Funktionalität oder eine Anwendung des Gerätes, wobei die Lizenz durch ein Verwaltungsgerät für das Gerät (G1, G2, G3) verwaltet oder erzeugt und die Lizenz bzw. ein Lizenzschlüssel über die Lizenz in einem non-fungible Token gespeichert und das non-fungible Token in einem Wallet (W) gespeichert wird, und wobei alle das non-fungible Token betreffenden Transaktionen in einer Blockchain gespeichert werden. Dabei wird für den Transport der Lizenz von dem Verwaltungsgerät (VWG) zu dem Gerät (G1, G2, G3) eine mobile Hardware (MHW) mit einem Blockchain-Knoten (BCLN) und dem Wallet (W) verwendet, wobei mit Speicherung des non-fungible Token in dem Wallet (W) der mobilen Hardware (MHW) diese Transaktion in dem Blockchain-Knoten (BCLN) der mobilen Hardware registriert wird, wobei beim Verbinden der mobilen Hardware (MHW) mit dem Gerät (G1, G2, G3) der Blockchain-Knoten (BCLN) aktiviert und das non-fungible Token zu den Gerät (G1, G2, G3) transferiert und dieser Transfer in dem Blockchain-Knoten (BCLN) der mobilen Hardware registriert wird, und wobei der Lizenzschlüssel des non-fungible Token zur Nutzung oder Freischaltung der Funktionalität oder Anwendung verwendet wird. Selbst in einer Umgebung ohne Netzwerkanbindung, insbesondere bei sog. Insel-betrieb von Geräten (G1, G2, G3), können NFT-basierte Lizenzen funktionieren und das Gesamtszenario verbessern. Dabei können die Offline-Transaktionen nach einem Wiederverbinden der mobilen Hardware (MHW) mit einem Online-System entweder einer Hauptkette hinzugefügt oder beibehalten und rückgängig gemacht werden.

## Beschreibung

Die Erfindung betrifft ein Verfahren, insbesondere ein computergestütztes Verfahren, zur Verwaltung einer Lizenz für ein offline einsetzbares Gerät, insbesondere für eine Funktionalität oder eine Anwendung des Gerätes, gemäß dem Oberbegriff des Patentanspruchs 1, eine mobile Hardware zur Durchführung des Verfahrens, sowie ein Computerprogramm-Produkt und ein computerlesbares Medium.

Die Anschaffung von Software bzw. von Geräten ist häufig mit hohen Kosten verbunden. Viele Geräte oder Softwareprodukte auf solchen Geräten sind dabei an eine Lizenz gebunden, d.h. nur ein Lizenznehmer darf sie effektiv nutzen. Dazu werden beispielsweise (ggf. mit kryptographischen Mitteln geschützte) Lizenzschlüssel erteilt und dem jeweiligen Gerät, auf welchem eine Software laufen soll, oder der Software selbst zugeordnet.

Im Folgenden wird der Lizenzschlüssel auch als technisches Äquivalent der Lizenz, die im Wesentlichen ein Benutzungsrecht darstellt, betrachtet, d.h., dass der legale Besitz des Lizenzschlüssels dazu berechtigt und befähigt, ein darauf bezogenes Gerät, eine Software, eine damit gegebene Anwendung oder eine sonstige zugeordnete Funktionalität zu nutzen.

Häufig werden solche Lizenzschlüssel von einem zentralen Lizensierungsnetzwerk oder einem zentralen Lizensierungs-Rechner erstellt und einem Gerät zugewiesen. Solange dem jeweiligen Gerät ein Lizenzschlüssel zugewiesen ist, kann dieses bzw. eine darauf enthaltene Software ohne Probleme genutzt werden.

Neuartige Geschäftsmodelle sind jedoch sehr offen gestaltet. Hier ist es häufig erforderlich, Lizenzen zwischen verschiedenen Geräten zu verschieben. Auch kann sich ein Geschäftsmodell ändern, wenn beispiels-weise ein neues Softwareprodukt auf den Markt kommt. Ein solches Softwareprodukt kann ein bestehendes Lizenzzertifikat oder einen bestehenden Lizenzschlüssel möglicherweise nicht korrekt lesen und erfassen.

Manchmal stellt es sich als problematisch heraus, dass viele Geräte, insbesondere im industriellen Bereich, nicht permanent und/oder nicht direkt mit dem Internet verbunden sind, so dass eine Übertragung von Lizenz-schlüsseln (License Keys) zu den Geräten über zwischengeschaltete Rechner, sogenannte Mediatoren (Mediators) stattfindet. Auch kann es sein, dass nur gelegentlich die Geräte mit dem Internet verbunden werden, so dass lediglich zu definierten Zeitpunkten eine Aktualisierung oder Gültigkeitsprüfung von Lizenzschlüsseln bzw. eine Übertragung von Lizenzschlüsseln möglich ist.

Eine Verwendung von Blockchain-gestützten Schlüsseln in einem temporär offline betriebenen Gerät ist in der Druckschrift EP 4 221 068 A1 - Singh et al. "System and method for writing and retrieval of data in blockchain" für den Fall beschrieben, dass das offline betriebene Gerät von Zeit zu Zeit online betrieben wird.

Durch eine nicht direkte und nicht kontinuierliche Verbindung mit dem Internet ist es durch ein privates Lizensierungs-Netzwerk eines Anbieters nicht möglich, den Verbleib der Lizenzschlüssel bzw. der Lizenzen permanent zu überwachen. Dies kann dazu führen, dass auch ein Verlust von Lizenzschlüsseln versehentlich durch einen Benutzer nicht klar erkannt werden kann. Dadurch kann ein bösgläubiger Anwender, der vortäuscht, dass er seine Lizenzen verloren hat, weitere Lizenzschlüssel erhalten.

Wenn die entsprechenden Geräte nicht permanent mit dem Internet verbunden sind oder keinen direkten Kontakt zu einem zentralen Lizensierungs-Netzwerk eines Anbieters haben, so besteht die Möglichkeit, Lizenzen auch ohne Verbindung zu dem zentralen Lizensierungsnetzwerk zu übertragen. Dazu können die Lizenzschlüssel auf einem portablen Speichermedium wie beispielsweise einer SD-Karte gespeichert werden und dieses Speichermedium dann mit dem entsprechenden Gerät verbunden werden. Die Lizenz kann dadurch über das portable Speichermedium von einem Gerät auf ein anderes übertragen werden.

Auch wenn eine solche Vorgehensweise sich grundsätzlich bewährt hat, so liegt jedoch eine erhebliche Missbrauchsmöglichkeit vor. Beispielsweise können Lizenzen geklont werden, indem eine solche Lizenz auf ein Gerät übertragen wird, dann ein Backup für dieses Geräts erstellt wird einschließlich de darin enthaltenen Lizenzschlüssel, anschließend die Lizenz auf ein anderes Gerät übertragen wird und das Backup mit den darin enthaltenen Lizenzschlüsseln wiederhergestellt wird. Auch ist es möglich, das Speichermedium mit dem Lizenzschlüssel zu kopieren oder "klonen" und damit die Lizenz unberechtigt zu vervielfältigen

Auf diese Weise kann eine Lizenz dazu benutzt werden, mehrere Geräte parallel zu betreiben, selbst wenn nur eine Lizenz für ein Gerät erworben wurde.

Eine Möglichkeit, dieser Problematik zu begegnen, besteht darin, Lizenzschlüssel nicht mehr auf die Geräte zu übertragen, sondern diese in einer Cloud-Lösung bereitzuhalten. Dabei kann auch die verwendete Software zumindest teilweise in der Cloud enthalten sein. Hier-bei ist jedoch problematisch, dass erfahrungsgemäß viele Anwender ihre Geräte aus Sicherheitsgründen nicht mit dem Internet verbinden und damit eine Lizenzvergabe in der Cloud bereits scheitert. Außerdem erfordern viele Geräte schnelle Reaktionszeiten im Millisekundenbereich. Auch dies ist nicht möglich mit einer cloudbasierten Lösung.

Die Europäische Patentanmeldung mit dem Aktenzeichen 23194019.8 - Hinkelmann et al. "Verfahren zum Verwalten von Lizenzen, System, Computerprogramm - Produkt und computerlesbares Medium" schlägt vor, für jedes Gerät oder jeden Anwender eine eigene Blockchain-Struktur, eine sogenannte Sidechain, zu verwenden, so dass für eine Fabrik oder eine andere - zumindest temporär - datentechnische Insellösung die Notwendigkeit einer permanenten und performanten Datenverbindung zu einem übergeordneten Netzwerk, insbesondere zum Internet, entfällt.

Bei einer solchen Lösung besteht weiterhin jedoch die Herausforderung, die "Lücke" zu einem Gerät, welches nicht permanent an das Fabriknetzwerk und damit an die Sidechain angebunden ist und daher beispielsweise mittels einer per Speichermedium (SD-Karte o.ä.) mit einer Lizenz "versorgt" werden muss, gegen Manipulationen etc. zu schützen.

Vor diesem Hintergrund besteht die Aufgabe der vorliegenden Erfindung darin, ein alternatives Verfahren zum Verwalten und insbesondere zur Verteilung bzw. den Transport von Lizenzen bereitzustellen, welches insbesondere die zuvor genannten Nachteile vermeidet und sich für den Betrieb von temporär oder dauerhaft datentechnisch isoliert betriebenen Geräten bzw. deren Software, Anwendungen oder Funktionalität eignet.

Die Lösung der Aufgabe basiert auch hier auf der grundsätzlichen Überlegung, non-fungible Token praktisch als digitale Zwillinge der Lizenzen zu nutzen und dadurch eine unberechtigte Vervielfältigung von Lizenzen zu verhindern, da solche non-fungible Token Lizenzen (NFTL) einzigartig sind und nicht vervielfältigt werden können. Ein non-fungible Token ist bevorzugt ein kryptografisch eindeutiges, unteilbares und unersetzbares, sowie über-prüfbares Token, das einen bestimmten Gegenstand, vorliegend eine Lizenz, repräsentiert. Die hohe Sicherheit der non-fungible Tokens liegt im Stand der Technik jedoch darin begründet, dass eine Transaktion von einem Wallet zu einem anderen immer durch die Registrierung dieser Transaktion in der Blockchain bzw. Sidechain registriert wird.

Es ist eine Kernidee der erfindungsgemäßen Lösung der beschriebenen Aufgabe, statt eines einfachen mobilen Wallets, also eines mobilen Datenspeichers (SD-Karte, USB-Speicher oder dgl.), mit einem herkömmlichen Lizenzschlüssel eine mobile Hardware zu verwenden, welche neben dem eigentlichen Wallet auch einen integrierten Blockchain-Knoten umfasst, einen sog. Lightweight-Blockchain-Knoten, der nur die Transaktionen bezüglich der im lokalen Wallet registrierten Lizenzinformation in Gestalt eines non-fungible Tokens verwaltet bzw. registriert und somit auch die Übertragung der Lizenz in Gestalt eines non-fungible Tokens (NFTL) zum Zielgerät (offline einsetzbares Gerät) und auch wieder vom Zielgerät zurück lückenlos registriert und mit der öffentlichen (Quell-)Blockchain synchronisiert.

Das heißt, dass temporäre private Transaktionen später wieder in eine "Haupt-Blockchain" eingebracht oder "zurückgespielt" werden und damit die "offline" durchgeführten Transaktionen, die die Verwendung der Lizenz reflektieren, Bestandteil der "Online"-Blockchain werden und dass dabei insbesondere eine Lizenz nach ihrer Nutzung in einem "Offline"-Kontext wieder zurückgegeben oder anderweitig verfügbar wird. Dabei kann insbesondere vorgesehen werden, dass der mobile Datenspeicher für die Einsatzdauer des Zielgerätes bzw. der lizensierten Anwendung, Software oder Funktion mit der mobilen Hardware verbunden bleibt, um insbesondere eine Manipulation, die im Klonen des bereits mit der Lizenz versehenen Gerätes besteht, zu verhindern.

Das Lizenz-Token hat dabei mehrere Funktionen oder "Facetten", wobei neben der eigentlichen Lizenzinformation im Sinne eines Schlüssels zur Nutzung eines "Assets" auch Lizenzbedingungen im Sinne eines "Smart Contract" und insbesondere zeitliche Bedingungen, z.B. hinsichtlich einer maximalen "Offline"-Nutzungsdauer" in dem Token codiert sind. Dazu gehört insbesondere, dass mit dem Token oder mit einer mit dem Token verknüpften Information die verwendbare mobile Hardware genau identifiziert ist, beispielsweise in Form einer Signatur, wobei das System nur Transaktionen mit der dadurch freigegebenen mobilen Hardware erlaubt. Dies betrifft zumindest eine Typinformation, regelmäßig jedoch die konkrete Hardware, ist dann also konkret auf die Hardware bezogen, insbesondere auf ein in der mobilen Hardware enthaltenes Sicherheitsmodul, z.B. TPM-Chip (Trusted Platform Module) oder dergleichen.

Dies bedeutet, dass der verwendete Smart Contract Standard (z.B. gemäß ERC 721) um eine Möglichkeit erweitert wird, mit der Transaktionen zum Übertragen von Lizenztoken vom autorisierten Knoten (hier: eine konkret spezifizierte mobile Hardware) auf einen "Offline" Knoten bemächtigt wird und zusätzlich mit definierten Zeitfenstern limitiert werden. Zugleich kann auch eine Limitierung auf einen konkreten Ziel-Knoten (also das Gerät mit dem "Asset") oder zumindest auf einen Zielknoten-Typ vorgesehen werden, was beispielsweise durch die Prüfung von Zertifikaten erreicht werden kann. Die mobile Hardware fungiert also als ein autorisierter privater Transaktionen-Cache. Die öffentliche verteilte Blockchain-Datenbank, also das in der Regel online verfügbare Hauptbuch oder "Ledger", kennt jeden autorisierten Knoten, also insbesondere jede autorisierte mobile Hardware, und registriert solche zugeschnitten auf den vorgesehenen Einsatzfall in dem Token. Die mobile Hardware wiederum hat zumindest eine spezifische Signatur, z.B. in einem TPM-Modul (Trusted Platform Module), die vom Netzwerk, also den an Transaktionen beteiligten Knoten, überprüft wird. Die mobile Hardware bildet weiterhin einen Lightweight-Blockchain-Knoten, und zwar entweder nur die dazu erforderliche und zertifizierte Software (ausführbarer Code, z.B. DLL's) zum Ablauf auf einem physisch mit der mobilen Hardware verbundenen Computer, oder vorteilhaft die Software mit einer eigenen Laufzeitumgebung (Prozessor, Speicher), und unterscheidet sich dadurch von gebräuchlichen Hardware-Wallets zur Verwaltung digitaler Währungen (z.B. Bitcoin-Hardware-Wallets), die zur gesicherten Speicherung privater Schlüssel für online-Transaktionen eingerichtet sind.

Die Aufgabe der Erfindung wird insbesondere von dem Verfahren gemäß Patentanspruch 1, der mobilen Hardware gemäß Patentanspruch 10, und von dazu eingerichteten Computerprogrammprodukten gelöst.

Dabei wird ein Verfahren, insbesondere computergestütztes Verfahren, zur Verwaltung einer Lizenz für ein offline einsetzbares Gerät, insbesondere für eine Funktionalität oder eine Anwendung des Gerätes, vorgeschlagen, wobei die Lizenz durch ein Verwaltungsgerät für das Gerät verwaltet oder erzeugt und die Lizenz bzw. ein Lizenzschlüssel über die Lizenz in einem non-fungible Token gespeichert und das non-fungible Token in einem Wallet gespeichert wird, und wobei alle das non-fungible Token betreffenden Transaktionen in einer Blockchain gespeichert werden. Dabei wird für den Transport der Lizenz von dem Verwaltungsgerät zu dem Gerät eine mobile Hardware mit einem Blockchain-Knoten und dem Wallet verwendet, wobei mit Speicherung des non-fungible Token in dem Wallet der mobilen Hardware diese Transaktion in dem Blockchain-Knoten der mobilen Hardware registriert wird, wobei beim Verbinden der Hardware mit dem Gerät der Blockchain-Knoten aktiviert und das non-fungible Token zu den Gerät transferiert und dieser Transfer in dem Blockchain-Knoten der mobilen Hardware registriert wird, und wobei der Lizenzschlüssel des non-fungible Token zur Nutzung oder Freischaltung der Funktionalität oder Anwendung verwendet wird. Selbst in einer Umgebung ohne Netzwerkanbindung, insbesondere bei sog. Insel-betrieb von Geräten, können NFT-basierte Lizenzen funktionieren und das Gesamtszenario verbessern. Dabei können die Offline-Transaktionen nach einem Wiederverbinden der mobilen Hardware mit einem Online-System entweder einer Hauptkette hinzugefügt oder beibehalten und rückgängig gemacht werden.

Weiter wird zur Lösung eine mobile Hardware zur Transferierung einer Lizenz, insbesondere für eine Funktionalität oder eine Anwendung, zu einem Gerät, in dem zuvor beschriebenen Verfahren vorgeschlagen, wobei die mobile Hardware einen Blockchain-Knoten und ein Wallet umfasst. Damit können die anhand des Verfahrens erläuterten Vorteile erzielt werden.

Vorteilhafte Ausgestaltungen sind in den abhängigen Patentansprüchen angegeben, wobei auch sinnfällige Kombinationen der Merkmale einsetzbar sind. Die Ausgestaltungen des Verfahrens gelten sinngemäß auch für die Vorrichtung und das Computerprogrammprodukt, und umgekehrt.

Vorteilhaft wird als die mobile Hardware eine Smartcard oder Mikroprozessorspeicherkarte mit einem Mikroprozessor und einem Programmspeicher verwendet wird, wobei der Blockchain-Knoten als eine Software im Programmspeicher realisiert ist und durch den Mikroprozessor ausgeführt wird, und wobei die Smartcard oder Mikroprozessorspeicherkarte einen Anwendungsspeicher aufweist, wobei der Inhalt des Wallet in dem Anwendungsspeicher gespeichert wird und somit ein Teil des Anwendungsspeichers das Wallet bildet. Dazu weist das (Ziel-)Gerät vorteilhaft selber einen "Slot" zur Konnektierung der mobilen Hardware auf; alternativ kann ein entsprechendes Lesegerät angeschlossen werden, zum Beispiel mittels einer USB-Verbindung oder drahtlos.

Alternativ kann als die mobile Hardware ein Speichermedium, insbesondere ein Speichermedium nach Art einer modifizierten SD-Speicherkarte oder eines USB-Speichers, verwendet werden, wobei der Blockchain-Knoten als eine Software in einem Programmspeicher des Speichermediums gespeichert ist, wobei diese Software beim Verbinden des Speichermediums mit dem Gerät und/oder mit dem Verwaltungsgerät jeweils zu dem Gerät bzw. dem Verwaltungsgerät übertragen und dort ausgeführt wird. Ein solches Speichermedium ist im allgemeinen preiswerter als eine Smartcard, die regelmäßig für den spezifischen Einsatz hergestellt oder vorkonfiguriert werden muss. Vorteilhaft wird beim Ausführen der Software auf dem Gerät bzw. dem Verwaltungsgerät geprüft, ob die mobile Hardware physisch mit dem Gerät und/oder mit dem Verwaltungsgerät verbunden ist, um Manipulationen vorzubeugen, die zum Beispiel darin bestehen können, die Software zu duplizieren und damit die Lizenz zur gleichen Zeit mehrfach zu verwenden. Zudem ist die mobile Hardware vorteilhaft gegen "Klonen" geschützt, insbesondere durch ein nicht kopierbares TPM-Modul und eine darauf bezogene hardware-basierte Verschlüsselung, deren Identität nicht einfach zu vervielfältigen ist. Ein klassisches Beispiel dafür sind diesbezügliche Eigenschaften gängiger Hardware-Wallets oder Secure-SD Karten mit aufgebrachten Kryptographie-Chip (o.ä.).

Als die mobile Hardware kann alternativ ein mobiles Kommunikationsgerät, insbesondere ein Mobiltelefon oder ein Tablet-Computer, verwendet werden, wobei der Blockchain-Knoten als eine Software in einem Programmspeicher des Kommunikationsgerätes gespeichert ist, wobei diese Software beim Verbinden des Kommunikationsgerätes mit dem Gerät und/oder mit dem Verwaltungsgerät auf dem Kommunikationsgerät ausgeführt wird. Mobile Kommunikationsgeräte, also beispielsweise Mobiltelefone oder Tablet-Computer, sind weit verbreitet und somit ohnehin vorhanden und stellen daher eine kostengünstige Alternative dar. Außerdem weisen sie neben leistungsfähiger Hardware auch meist schon Sicherheitsmerkmale wie TPM-Module (Trusted Platform Module) zur eindeutigen Identifikation und für kryptographischen Schutz sowie per Hardware und Firmware geschützte Speicherbereiche auf; letztere können sowohl zum Schutz der Software, die den Blockchain-Knoten bildet, als auch zum Schutz des Wallet verwendet werden.

Grundsätzlich ist von Vorteil, wenn der Programmspeicher mit der Software und/oder die Software selbst und/oder das Wallet des mobilen Speichers manipulationsgesichert wird, insbesondere mittels eines gerätespezifischen kryptographischen Schlüssels nach Art eines TPM-Moduls.

Vorzugsweise wird während der Nutzung des offline einsetzbaren Geräts, insbesondere der Funktionalität oder der Anwendung des Gerätes, überprüft, ob die mobile Hardware mit der Lizenz weiterhin mit dem Gerät physisch oder im Falle der Verwendung eines mobilen Kommunikationsgerätes mittels einer direkten drahtlosen Verbindung verbunden ist, so dass ein Einsatz des Gerätes an den physischen Besitz der mobilen Hardware gekoppelt werden kann.

Zur flexiblen bzw. anderweitigen Verwendung der Lizenz ist es möglich, zur Rücktransferierung der Lizenz das non-fungible Token von dem Gerät in das Wallet der mobilen Hardware oder in ein anderes Wallet einer anderen, mit einem Blockchain-Knoten versehenen Hardware, zu übertragen und diese Transaktion in diesem Blockchain-Knoten zu registrieren und die Funktionalität oder Anwendung auf dem Gerät zu de-lizensieren, wobei nach Verbindung der mobile Hardware mit einem anderweitigen Gerät, insbesondere mit dem Verwaltungsserver, das non-fungible Token auf das anderweitige Gerät übertragen und die Lizenz anderweitig verfügbar gemacht wird oder "zurückgegeben" wird, womit beispielsweise eine Nutzungsdauerabhängige Vergütung gestoppt werden kann.

Im Zuge der Rücktransferierung in ein Wallet (W) wird eine Konfliktprüfung in Bezug auf einen Widerspruch des zurückzutransferierenden non-fungible Tokens zu einer in diesem Wallet registrierten zwischenzeitlichen Transaktion vorgenommen, und im Falle eines Konfliktes wird eine Meldung ausgegeben, die zwischenzeitliche Transaktion verworfen, und/oder die mit dem zurückzugebenden non-fungible Token verknüpfte Lizenz gesperrt. Damit können Aktionen böswilliger Nutzer, die beispielsweise in der parallelen Nutzung der in einem "online"-Wallet und der im Wallet der mobile Hardware gespeicherten Version des non-fungible Tokens bzw. der damit verbundenen Lizenz bestehen kann, zumindest "nachträglich" detektiert und auf einen solchen Missbrauch geeignet reagiert werden.

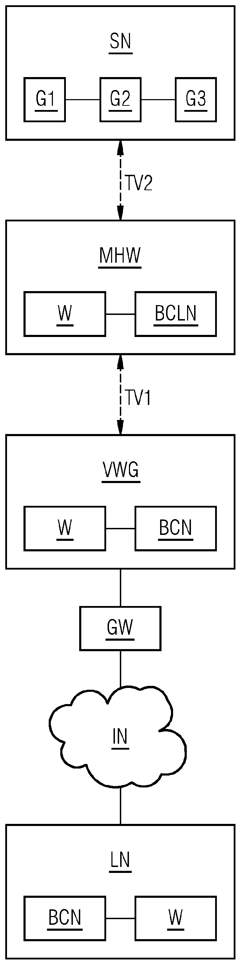

Ein Ausführungsbeispiel des erfindungsgemäßen Verfahrens wird nachfolgend anhand der Zeichnung erläutert. Es dient gleichzeitig der Erläuterung der erfindungsgemäßen mobilen Hardware und des Computerprogrammproduktes.

Dabei zeigt die einzige Figur in schematischer Darstellung ein System bestehend aus einem Gerät mit zu lizensierender Software, Anwendung oder Funktionalität, einem Verwaltungsgerät und einem Lizenznetz.

Das nachfolgend beschriebene Verfahren deckt das Problem ab, wie ein Kunde Lizenzschlüssel auch ohne aktive Netzwerkverbindung und in sehr kurzer Zeit von einem Gerät auf ein anderes verschieben kann mittels einer Offline-Übertragung von NFTL (Non-Fungible Token Licenses) offline (ohne Netzwerkverbindung) zu einem Gerät. Dabei sollen die folgenden Funktionen müssen erhalten bleiben:
1. Einfache Bedienung:
   Jede zusätzliche Barriere, die eingeführt wird, um mehr Transparenz und Integrität des NFTL bei der Übertragung von einem Gerät auf ein anderes zu schaffen, erhöht den operativen Aufwand des Kunden. Denn diese Mittel und Infrastruktur müssen betrieben und gewartet (auf dem neuesten Stand gehalten) werden. Aus diesem Grund muss die Bedienung für den Kunden so einfach wie möglich bleiben. Der Kunde soll die fehlende Netzwerkverbindung überbrücken, indem er auf einfache die NFTL auf das Zielgerät (und zurück) trägt.
2. Zuverlässigkeit:
   Jeder Kunde hat die Erwartung, dass die Fähigkeit eines etablierten Systems erhalten bleibt, die vorgesehenen Funktionen auf vorhersehbare Weise und unter vorhersehbaren Bedingungen zu erfüllen. Auf der anderen Seite ist soll ein Anbieter geschützter Software, die auf den Geräten läuft, vor Fälschung und illegalem Klonen geschützt werden. Die Offline-Übertragung von NFTL muss zuverlässig und manipulationssicher sein.
3. Geschwindigkeit:
   Die Geschwindigkeit der Aktionen bei der Erstaktivierung eines neuen Geräts und die Zeit, die benötigt wird, um die Software auf dem Gerät in den Betriebsmodus zu versetzen, muss so kurz wie möglich sein. Kein Kunde akzeptiert, mehrmals von einem Gerät zu einem mit dem Netzwerk verbundenen PC zu gehen, um Informationen zu transportieren und zu transportieren. Die Anzahl der Maßnahmen muss idealerweise 1 betragen.
4. Einfache Reparatur:
   Derzeit ersetzt der Kunde im Falle eines Ausfalls eines nicht angeschlossenen Geräts, das ausgetauscht werden muss (Ersatzteilszenario), nur das beschädigte Gerät durch ein neues, zieht den Speicher des beschädigten Geräts ab und steckt es in das neue Gerät ein, schließt das neue Gerät an die Maschine an und startet das neue Gerät. Danach muss das neue Gerät nur noch geringfügig lokal am Gerät angepasst werden, um den Austausch abzuschließen und den Betriebsmodus zu erreichen. Die Qualitätsmerkmale wie Bequemlichkeit, Komfort, Einfachheit und Zeit für die Behebung von Mängeln müssen auch für die durch NFTL geschützte Software erhalten bleiben.

Leider bietet der typische "Shopfloor" eines Industriekunden keine ideale Arbeitsumgebung und für Manipulationen oder Angriffe sensible Funktionen müssen verbessert werden, um die gewünschte Funktionalität zu bieten.

Die größte Herausforderung bei der Offline-Übertragung gesicherter Informationen besteht darin, dass sie eine Angriffsfläche für externe Angriffe bzw. Manipulationen bieten, der die Integrität von NFTL beeinträchtigt. Dazu gehört beispielsweise die Möglichkeit, die Inhalte, die auf den tragbaren Medien gespeichert sind, die zum Transportieren einer Lizenz/Lizenzschlüssel (hier: der NFTL) verwendet werden, unberechtigt zu kopieren.

Derzeit gibt es keine Standardlösung für dieses Problem für die Blockchain-Technologie. In den meisten Fällen wird eine Online-Verbindung zum Hauptnetz benötigt, die die Transaktion des Geräts überprüft und die Transaktion in den nächsten Block einfügt. Die Grundannahme ist, dass, wenn ein Knoten lange genug offline ist, dass er nicht auf das Hauptnetz zugreifen kann, um Transaktionen zu synchronisieren, die vom Gerät initiierten Transaktionen während der Synchronisierung trotzdem verworfen werden, wenn der Knoten wieder online geht. Aber das würde im Falle von NFTL nicht funktionieren. Zusätzlich sind Hardware-Wallets bewusst so entworfen, dass diesem Wallet zugeordnete Tokens gesichert (Backup) werden können, da die Hardware-Wallets über einen Nutzer autorisiert werden. Im Industrieumfeld ist die Bindung aber nicht auf den Nutzer oder Besitzer des Hardware-Wallets erfolgt, sondern zur Hardware selbst.

Nachfolgend wird daher ein Verfahren beschrieben, um einen Hardware-Wallet, einen Lightwight-Blockchain-Knoten und eine Blockchain zu kombinieren, wobei Offline-Transaktionen in das Netzwerk gebracht werden können, um die Herausforderungen zu verringern, mit denen Blockchain-basierte Lizenzierungslösungen konfrontiert sind, wenn sie auf Offline-Knoten in einer industriellen Domäne ausgeführt werden müssen.

Komponenten, die an dieser Erfindung beteiligt sind, sind:
1. Hardware-Dongle (nachfolgend auch mobile Hardware MHW genannt):
   Hierbei handelt es sich um eine spezielle Hardware, die die (Hardware-)Wallet W und einen "leichten" (funktionsreduzierten) Blockchain-Knoten BCN kombiniert, der in einem eigenständigen kleinen Gerät ("IoT-Gerät") ausgeführt wird. Der Hardware-Dongle benötigt möglicherweise keine eigene Stromquelle und wird von dem Gerät mit Strom versorgt, an das er angeschlossen ist. Die Komponenten, die Teil des Hardware-Dongles sind, sind:
   a. Hardware-Wallet: Ein Wallet W, das aus dem öffentlichen-privaten Schlüsselpaar des Benutzers oder Computers bzw. Geräts besteht. Das Wallet W ist auch in der Lage, eine Liste der Transaktionen betreffend eines Lizenz-Tokens NFLT zu speichern.
   b. Light Node: Ein "lightweight" Blockchain-Knoten BCLN, der nur Transaktionen speichert, die sich auf einen bestimmten Vermögenswert (hier: Lizenz-Token NFLT) beziehen. Normalerweise hält oder speichert ein Blockchain-Knoten alle Transaktionen, die in der Blockchain stattfinden. Da die mobile Hardware MHW (z.B. ein loT-Gerät) nur seine eigenen Transaktionen speichert und nicht unbedingt über viel Speicher und Rechenleistung verfügt, umfasst dieser Light-Knoten BCN nur Blöcke, die Transaktionen enthalten, die sich auf das Gerät G1, G2, G3, mit dem er verbunden ist, beziehen, bzw. auf den Lizenz-Token NFLT.
   c. Früherer Zustand der Blockchain: Jedes Mal, wenn der Dongle mit dem Internet verbunden ist, synchronisiert er sich mit dem Haupt-Blockchain-Netzwerk LN ("Lizenz-Netzwerk") mit dem öffentlichen Blockchain-Knoten BCN und dem dortigen Wallet W, um die neuen Transaktionen weiterzuleiten und den aktuellen Status der Assets (hier insbesondere Funktionalität oder Anwendung des Gerätes G1, G2, G3 im isolierten Subnetz SN) im Zusammenhang mit diesem Gerät G1, G2, G3 abzurufen.
   d. Aktueller Status der Assets, die vom Gerät G1, G2, G3 geändert wurden: Falls das Asset (in diesem Fall die Lizenz bzw. das Lizenz-Token NFLT) einige Änderungen aufweist, die vom loT-Gerät vorgenommen wurden, z. B. die Zeit, die seit der Gültigkeit des Zertifikats verstrichen ist, oder eine neue Anforderung, die Berechtigungen der Lizenz zu erweitern.
2. loT-Gerät (kurz: Gerät):
   Das Gerät G1, G2, G3 in der Fabrikhalle bzw. dem (vom Internet IN oder Intranet isolierten) Subnetz SN.
3.: Verwaltungsgerät VWG: Ein Gerät, z.B. Industrielle SPS, das viele loT-Geräte, hier: die Geräte G1, G2, G3, verwaltet und über ein Gateway GW mit dem Netzwerk IN (hier: Internet) verbunden ist.

Wie in der Problembeschreibung angegeben, ist die Einführung eines spezialisierten, vermittelnden Knotens BCLN (Blockchain Lightweight Node) erforderlich. Zu diesem Zweck werden die allgemein verfügbaren Lösungen von Hardware Wallets erweitert. Darüber hinaus wird der tragbaren, mobilen Hardware MHW ein "leichter" Blockchain-Knoten BCLN hinzugefügt, um den beabsichtigten Blockchain-Knoten zu realisieren, der nur Transaktionen speichert, die sich auf einen bestimmten Vermögenswert oder Asset (hier: Lizenz für ein offline einsetzbares Gerät, insbesondere für eine Funktionalität oder eine Anwendung des Gerätes) beziehen. Normalerweise hält oder speichert ein Blockchain-Knoten alle Transaktionen, die in der Blockchain stattfinden. Da die mobile Hardware MHW nur über seine eigenen Transaktionen und nicht über viel Speicher und Rechenleistung verfügt, besteht dieser Light-Knoten nur aus den Blöcken, die Transaktionen enthalten, die sich auf das Gerät G1, G2, G3 beziehen, mit dem er verbunden ist bzw. verbunden werden soll oder kann. Im Rahmen einer temporären Verbindung TV1 des mobilen Gerätes MHW mit dem verwaltungsgerät VWG kann ein für die Geräte G1, G2, G3 erforderlicher Lizenz-Token aus dem Wallet W des Verwaltungsgerätes VWG in das Wallet W der mobilen Hardware MHW transferiert werden, wobei dieser Lizenzschlüssel bzw. das Lizenz-Token vorher aus dem Lizenznetzwerk LN bezogen wurde; auch der umgekehrte Weg ist möglich, um eine Lizenz "zurückzugeben".

Der portable Knoten BCLN sammelt alle Transaktionen des entkoppelten Netzwerks SN von getrennten Geräten G1, G2, G3 (es kann sich um einen oder mehrere miteinander verbundene Geräte oder "Knoten" handeln). In diesem Beispiel ist der portable Knoten BCLN und dessen Wallet W mit einem Gerät G1, G2, G3 im Subnetz SN mittels einer temporären Verbindung TV2 verbunden. Die Blockchain-Technologie kann dafür sorgen, dass Transaktionen zwischen den Geräten G1, G2, G3 im Subnetz SN geteilt werden.

Der portable Knoten BCLN muss die ausstehenden Transaktionen des/der getrennten Knoten(s) bzw. der Geräte G1, G2, G3 mit den Transaktionen in den Blöcken auf der Hauptkette (Blockchain des Lizenz-Netzwerks KN) vermitteln. Je nach ist der portable Knoten BCLN berechtigt, Konflikte im Namen des Lizenzierungsnetzes LN direkt am Gerät G1, G2, G3 zu lösen und aktualisiert den Zustand und die Blockchain auf dem Gerät G1, G2, G3 entsprechend.

Wenn der portable Knoten BCLN beispielsweise einen ERC721-Transfer-Smart-Contract ausgeführt hat und eine Inkonsistenz erkennt, dass ein Lizenz-Token NFTL zweimal an verschiedenen Orten übertragen wird, ist der portable Knoten BCLN berechtigt, den Konflikt zu lösen, indem er die duplizierte NFTL direkt auf dem Gerät verbrennt (löscht).

Für andere Arten von Transaktionen wählt der portable Knoten BCLN einen geeigneten Ansatz aus, um die Transaktionen an die Blockchain anzuhängen oder zusammenzuführen.

Darüber hinaus speichert der portable Knoten BCLN auf gesicherte Weise (verschlüsselt mit dem privaten Schlüssel des lokalen Wallet W der mobilen Hardware MHW) die Blockchains des Kunden und signierte und verifizierte sog. "Assemblies", die die virtuelle Maschine anbieten, die sog. Smart Contracts ausführt. Daher stellt der portable Knoten BCLN bzw. die mobile Hardware MHW einen gesicherten Satz von Anwendungen auf seinem Speicher bereit, die auf dem jeweils angeschlossenen Gerät G1, G2, G3 oder in Sonderfällen auf dem Verwaltungsgerät VWG ausgeführt werden. Die Geräteressourcen wie RAM und CPU werden genutzt.

Die häufigeren Transaktionen auf dem Gerät G1, G2, G3 wie Nutzungen können auf einer anderen Blockchain-Kette als die beschriebenen NFTL-Transaktionen registriert werden. Dies bietet die Möglichkeit, Transaktionszusammenführungen anders zu handhaben. So werden z.B. Nutzungen nur protokolliert und bei diesbezüglichen Konflikten kann mit vereinfachten Mitteln eine solche Transaktion verworfen oder verhindert werden. Im Gegensatz dazu müssen Transaktionen, die die Lizensierung einer Nutzung eines Softwareprodukts auf einem Gerät G1, G2, G3 unabstreitbar protokollieren, beibehalten und erweitert werden; der Zeitstempel des Blockzeitstempels spielt dabei keine Rolle. Dort muss die Information über eine solche Transaktion stärker geschützt werden.

Die Geräte G1, G2, G3 sind in der Lage, Transaktionen für mehrere Smart Contracts zu signieren, ohne dass dies durch das das Lizenznetz LN verifiziert werden muss. Trotz Trennung vom Netzwerk LN bietet sich die Möglichkeit, Transaktionen auf einem Gerät G1, G2, G3 abzuschließen und festzuschreiben und sogar in einem angeschlossenen Subnetz SN zu verteilen.

Ein Ablauf (Workflow) der Erstellung und Übergabe der Lizenz an das Gerät G1, G2 G3 kann sich wie folgt gestalten:
1. Die Identität des Geräts G1, G3, G3 wird übernommen und der Lizenz hinzugefügt.
2. Es wird eine neue Lizenz in Form eines Non-fungible (Lizenz-) Tokens NFLT generiert und eine Transaktion erstellt. Dies kann im Lizenznetz LN geschehen und dazu das dortige Wallet W über das Internet IN und das Gateway GW mit dem Wallet W des Verwaltungsgerätes VWG diesbezüglich synchronisiert werden bzw. das Token NFLT der Lizenz wird in das Wallet W des Verwaltungsgerätes VWG transferiert.
3. Die NFLT-Lizenz wird auf mittels der temporären Verbindung TV1 das Wallet des Blockchain-Knotens BCLN der mobilen Hardware MHW, der für das Gerät G1, G2, G3 registriert ist, verschoben.
4. Zum Zeitpunkt der Übertragung wird die mit der mobilen Hardware MHW verknüpfte Identität überprüft. Wenn der Dongle nicht mit dem Gerät G1, G2, G3 verknüpft ist, für das die im Token NFLT repräsentierte Lizenz erstellt wurde, wird das NFLT als inaktiv markiert.
5. Nur wenn die Identität der mobilen Hardware MHW einer ID des NFLT-Lizenzinhabers zugeordnet ist und die Hardware den Anforderungen des Kopierschutzes ausreichend bewertet wird, wird das NFLT als aktiviert markiert.
6. Der Dongle wird dann von dem Verwaltungsgerät VWG (z.B. einer übergeordneten SPS) getrennt und manuell zu dem Subnetz SN bzw. dem Gerät G1 verbracht (temporäre Verbindung TV2).
7. Das Gerät G1 beginnt mit der Verwendung der mobilen Hardware MHW und initiiert den Transfer der Lizenz für den Zugriff auf einen Dienst oder die Nutzung einer Software, Funktionalität oder eine Anwendung des Gerätes G1.
8. Die mobile Hardware MHW ("Hardware-Dongle") und der "Light-Node" BCLN fungieren nun als Single-Node-Blockchain und die erstellten Transaktionen werden in den dortigen Blöcken hinzugefügt.
9. G1 ist nun der Besitzer des Lizenztokens und nach erfolgreicher Ausführung der ERC721 Erweiterung in einem Transaktionsblock auf G1 und MHW festgehalten.
10. Für die Geräte G2 und G3 wird entsprechend 6. bis 9. wiederholt.
11. Im Laufe der Zeit wird die Zeitdauer der Nutzung der Lizenz im NFLT ständig aktualisiert. Alle Geräte G1, G2, G3 und MHW teilen das Wissen, welche Lizenz welchem Gerät zugesprochen wurde. Zusätzlich wird die Autorisierung der mobilen Hardware MHW zeitlich limitiert, um Manipulationen zu erschweren.

Die erwähnte Nutzungsdauer der Lizenz kann in das Lizenznetz bzw. das dortige Wallet W (auch "Ledger" genannt) zurückgemeldet werden, außerdem kann auch die Lizenz selber zurücktransferiert werden. Ein diesbezüglicher Ablauf (Workflow) kann sich wie folgt gestalten:
1. Nach einem bestimmten Zeitintervall muss der Dongle bzw. die mobile Hardware MHW manuell aus dem "IoT-"Gerät G1, G2, G3 entfernt und an das Verwaltungsgerät VWG angeschlossen werden (temporäre Verbindung TV1).
2. Die neu erstellten Blöcke im Knoten BCLN werden der Hauptkette als neue Transaktionen vorgeschlagen.
3. Wenn kein Konflikt vorliegt, werden alle Transaktionen der Hauptkette hinzugefügt.
4. Im Falle eines Konflikts - ein solcher kann beispielsweise bei böswilligen parallelen "online"- und "offline"- Transaktionen entstehen - Transaktionen wird eine neue Transaktion für die Geräte G1, G2, G3 erstellt und in die Hauptkette integriert. Somit werden zeitliche Konflikte behoben und die offline-Transaktionen in die Blockchain LN eingefügt. Falls zwischenzeitlich anderweitige Transaktionen unerwarteterweise in der Hauptkette erfolgten, werden diese rückgängig gemacht und ihr Status wird in der Warteschlange im Wallet W der mobilen Hardware MHW verwaltet. Somit werden diese Zustände der offline Transaktionen auf den Geräten G1, G2, G3 erhalten und online-Transaktionen widerrufen. Ggf. werden Konflikte, insbesondere solche, die auf böswillige Transaktionen oder Missbrauch schließen lassen, einem Benutzer oder Administrator gemeldet und/oder der betroffene Lizenzschlüssel gesperrt.
5. In einer anderen Iteration kann eine spezielle Blockchain verwendet werden, die sicherstellt, dass Offline-Transaktionen für einen eindeutigen Vermögenswert (Asset) immer dem Netzwerk hinzugefügt werden.
6. Sobald der Knoten BCLN mit der Hauptkette bzw. zumindest dem Wallet W des Verwaltungsgerätes VWG synchronisiert wurde (temporäre Verbindung TV1), kann das Dongle bzw. die mobile Hardware MHW wieder an das Gerät G1, G2, G3 angeschlossen werden (temporäre Verbindung TV2).

Selbst in einer Umgebung ohne Netzwerk können somit NFT-basierte Lizenzen funktionieren und das Gesamtszenario verbessern. Die Offline-Transaktionen werden entweder der Hauptkette hinzugefügt oder beibehalten und andere, invalide rückgängig gemacht, sobald das Dongle bzw. das mobile Gerät M HW wieder mit dem Verwaltungsgerät VWG verbunden ist.

## Patentansprüche

1. Verfahren, insbesondere computergestütztes Verfahren, zur Verwaltung einer Lizenz für ein offline einsetzbares Gerät (G1, G2, G3), insbesondere für eine Funktionalität oder eine Anwendung des Gerätes,
wobei die Lizenz durch ein Verwaltungsgerät für das Gerät (G1, G2, G3) verwaltet oder erzeugt und die Lizenz bzw. ein Lizenzschlüssel über die Lizenz in einem non-fungible Token gespeichert und das non-fungible Token in einem Wallet (W) gespeichert wird, und
wobei alle das non-fungible Token betreffenden Transaktionen in einer Blockchain gespeichert werden,
**dadurch gekennzeichnet,**
**dass** für den Transport der Lizenz von dem Verwaltungsgerät (VWG) zu dem Gerät (G1, G2, G3) eine mobile Hardware (MHW) mit einem Blockchain-Knoten (BCLN) und dem Wallet (W) verwendet wird, wobei mit Speicherung des non-fungible Token in dem Wallet (W) der mobilen Hardware (MHW) diese Transaktion in dem Blockchain-Knoten (BCLN) der mobilen Hardware registriert wird,
**dass** beim Verbinden der mobilen Hardware (MHW) mit dem Gerät (G1, G2, G3) der Blockchain-Knoten (BCLN) aktiviert und das non-fungible Token zu den Gerät (G1, G2, G3) transferiert und dieser Transfer in dem Blockchain-Knoten (BCLN) der mobilen Hardware registriert wird, und
**dass** der Lizenzschlüssel des non-fungible Token zur Nutzung oder Freischaltung der Funktionalität oder Anwendung verwendet wird.

2. Verfahren nach Patentanspruch 1,
**dadurch gekennzeichnet,**
**dass** als die mobile Hardware (MHW) eine Smartcard oder Mikroprozessorspeicherkarte mit einem Mikroprozessor und einem Programmspeicher verwendet wird, wobei der Blockchain-Knoten (BCLN) als eine Software im Programmspeicher realisiert ist und durch den Mikroprozessor ausgeführt wird, und wobei die Smartcard oder Mikroprozessorspeicherkarte einen Anwendungsspeicher aufweist, wobei der Inhalt des Wallet (W) in dem Anwendungsspeicher gespeichert wird.

3. Verfahren nach Patentanspruch 1,
**dadurch gekennzeichnet,**
**dass** als die mobile Hardware (MHW) ein Speichermedium, insbesondere ein Speichermedium nach Art einer modifizierten SD-Speicherkarte oder eines USB-Speichers, verwendet wird, wobei der Blockchain-Knoten (BCLN) als eine Software in einem Programmspeicher des Speichermediums gespeichert ist,
wobei diese Software beim Verbinden des Speichermediums mit dem Gerät (G1, G2, G3) und/oder mit dem Verwaltungsgerät (VWG) jeweils zu dem Gerät bzw. dem Verwaltungsgerät (VWG) übertragen und dort ausgeführt wird.

4. Verfahren nach Patentanspruch 3,
**dadurch gekennzeichnet,**
**dass** beim Ausführen der Software auf dem Gerät (G1, G2, G3) bzw. dem Verwaltungsgerät (VWG) geprüft wird, ob die mobile Hardware (MHW) physisch mit dem Gerät und/oder mit dem Verwaltungsgerät (VWG) verbunden ist.

5. Verfahren nach Patentanspruch 1,
**dadurch gekennzeichnet,**
**dass** als die mobile Hardware (MHW) ein mobiles Kommunikationsgerät, insbesondere ein Mobiltelefon oder ein Tablet-Computer, verwendet wird, wobei der Blockchain-Knoten (BCLN) als eine Software in einem Programmspeicher des Kommunikationsgerätes gespeichert ist,
wobei diese Software beim Verbinden des Kommunikationsgerätes mit dem Gerät (G1, G2, G3) und/oder mit dem Verwaltungsgerät (VWG) auf dem Kommunikationsgerät ausgeführt wird.

6. Verfahren nach einem der vorhergehenden Patentansprüche,
**dadurch gekennzeichnet,**
**dass** während der Nutzung des offline einsetzbaren Geräts (G1, G2, G3), insbesondere der Funktionalität oder der Anwendung des Gerätes (G1, G2, G3), überprüft wird, ob die mobile Hardware (MHW) mit der Lizenz weiterhin mit dem Gerät (G1, G2, G3) physisch oder im Falle der Verwendung eines mobilen Kommunikationsgerätes mittels einer direkten drahtlosen Verbindung verbunden ist.

7. Verfahren nach einem der vorhergehenden Patentansprüche,
**dadurch gekennzeichnet,**
**dass** der Programmspeicher mit der Software und/oder die Software selbst und/oder das Wallet (W) des mobilen Speichers manipulationsgesichert wird, insbesondere mittels eines gerätespezifischen kryptographischen Schlüssels nach Art eines TPM-Moduls.

8. Verfahren nach einem der vorhergehenden Patentansprüche,
**dadurch gekennzeichnet,**
**dass** zur Rücktransferierung der Lizenz das non-fungible Token von dem Gerät (G1, G2, G3) in das Wallet (W) der mobilen Hardware oder in ein anderes Wallet (W) einer anderen, mit einem Blockchain-Knoten (BCLN) versehenen Hardware, übertragen und diese Transaktion in diesem Blockchain-Knoten (BCLN) registriert und die Funktionalität oder Anwendung auf dem Gerät (G1, G2, G3) de-lizensiert wird, wobei nach Verbindung der mobile Hardware (MHW) mit einem anderweitigen Gerät (G1, G2, G3), insbesondere mit dem Verwaltungsserver, die das non-fungible Token auf das anderweitige Gerät (G1, G2, G3) übertragen und die Lizenz anderweitig verfügbar gemacht wird.

9. Verfahren nach Patentanspruch 8,
**dadurch gekennzeichnet,**
**dass** im Zuge der Rücktransferierung in ein Wallet (W) eine Konfliktprüfung in Bezug auf einen Widerspruch des zurückzutransferierenden non-fungible Tokens zu einer in diesem Wallet registrierten zwischenzeitlichen Transaktion vorgenommen wird und im Falle eines Konfliktes eine Meldung ausgegeben wird, die zwischenzeitliche Transaktion verworfen wird, und/oder die mit dem zurückzugebenden non-fungible Token verknüpfte Lizenz gesperrt wird.

10. Mobile Hardware (MHW) zur Transferierung einer Lizenz, insbesondere für eine Funktionalität oder eine Anwendung, zu einem Gerät (G1, G2, G3), in einem Verfahren nach Patentanspruch 1,
wobei die mobile Hardware (MHW) einen Blockchain-Knoten (BCLN) und ein Wallet (W) umfasst.

11. Mobile Hardware (MHW) nach Patentanspruch 9,
**dadurch gekennzeichnet,**
**dass** die mobile Hardware (MHW) eine Smartcard oder Speicherkarte mit einem Mikroprozessor und einem Programmspeicher ist, wobei der Blockchain-Knoten (BCLN) als eine Software im Programmspeicher realisiert ist und zur Ausführung durch den Mikroprozessor eingerichtet ist.

12. Mobile Hardware (MHW) nach Patentanspruch 9,
**dadurch gekennzeichnet,**
**dass** die mobile Hardware (MHW) eine Smartcard oder Mikroprozessorspeicherkarte mit einem Mikroprozessor und einem Programmspeicher ist, wobei der Blockchain-Knoten (BCLN) als eine Software im Programmspeicher realisiert ist und zur Ausführung durch den Mikroprozessor vorgesehen und eingerichtet, und wobei die Smartcard oder Mikroprozessorspeicherkarte einen Anwendungsspeicher aufweist, wobei der Anwendungsspeicher als das Wallet (W) eingerichtet ist.

13. Mobile Hardware (MHW) nach Patentanspruch 10 oder 11,
**dadurch gekennzeichnet,**
**dass** der durch die Software gebildete Blockchain-Knoten (BCLN) dazu eingerichtet ist, bei seiner Ausführung zu prüfen, ob die mobile Hardware (MHW) physisch mit dem Gerät (G1, G2, G3) und/oder mit dem Verwaltungsgerät (VWG) verbunden ist.

14. Mobile Hardware (MHW) nach einem der Patentansprüche 9 bis 12,
**dadurch gekennzeichnet,**
**dass** der Programmspeicher mit der Software und/oder die Software selbst und/oder das Wallet (W) des mobilen Speichers manipulationsgesichert ist, insbesondere dazu einen gerätespezifischen kryptographischen Schlüssel nach Art eines TPM-Moduls aufweist.

15. Mobile Hardware (MHW) nach einem der Patentansprüche 9 bis 13,
**dadurch gekennzeichnet,**
**dass** vorgesehen ist,
**dass** zur Rücktransferierung der Lizenz das non-fungible Token von dem Gerät (G1, G2, G3) in das Wallet (W) der mobilen Hardware oder einer anderen, mit einem Blockchain-Knoten (BCLN) versehenen Hardware, übertragen und diese Transaktion in diesem Blockchain-Knoten (BCLN) registriert und die Funktionalität oder Anwendung auf dem Gerät de-lizensiert wird, wobei nach Verbindung der mobile Hardware (MHW) mit einem anderen Gerät (G1, G2, G3), insbesondere mit dem Verwaltungsserver, die Lizenz mit Übertragung des non-fungible Token anderweitig verfügbar gemacht wird.

16. Computerprogrammprodukt,
welches ausgebildet ist, das Verfahren nach einem der Patentansprüche 1-8 durchzuführen, wenn es auf der mobilen Hardware (MHW) installiert und wenn es ausgeführt ist, wobei das Computerprogrammprodukt zur Realisierung des Blockchain-Knotens (BCLN) eingerichtet ist.
